# FASCICULE DE BREVET EUROPEEN

(11) **EP 1 750 047 B1**
(45) Date de publication et mention de la délivrance du brevet: **25.08.2010**
(21) Numéro de dépôt: 06366002.1
(22) Date de dépôt: 07.06.2006
(51) Int. Cl.: F16L 3/10, F16L 3/13, F16L 3/22, F16L 3/227

(54) **Support de pose pour des tuyaux, câbles, canalisations et autre circuits**
Befestigungselement zum Verlegen von Rohren, Kabeln, Kanalisierungen und anderen Leitungen
Holder for laying pipes, cables, hoses and other circuits

(30) Priorité: 04.08.2005 FR 0508307
(43) Date de publication de la demande: 07.02.2007
(73) Titulaire: Maret, Alain, 57000 Metz (FR)
(72) Inventeur: Maret, Alain, 57000 Metz (FR)
(74) Mandataire: Poupon, Michel

(56) Documents cités:
- DE-U- 1 863 821
- FR-A- 1 568 793
- FR-A- 2 251 768
- FR-A- 2 708 053
- FR-A- 2 835 035
- GB-A- 1 191 102
- US-A- 4 534 147
- US-A- 5 243 800

## Description

La présente invention concerne un support de pose pour des tuyaux, câbles, canalisations et autres circuits.

La pose de circuits électriques, de réseaux de chauffage ou de réseaux d'eau, par exemple, nécessite un arrangement préalable de ces câbles, tuyaux, ou canalisations qui est réalisé généralement par un positionnement préalable de ces câbles, tuyaux ou canalisations sur un support, qui doit lui-même être fixé, généralement sur un mur, à l'aide de clous, vis ou autres moyens de fixation appropriés. Cette fixation préalable du support nécessite un outillage spécifique, augmentant le temps de pose de ces différents types de réseaux.

Par ailleurs, le support des câbles, canalisations ou tuyaux doit permettre le maintien de ces éléments lors de la construction de l'édifice les abritant, mais aussi après cette construction.

Ainsi, le brevet FR 2 835 035 décrit un support de câbles présentant sur une de ses faces une gouttière pour l'insertion d'un conduit, tandis que l'autre face présente une couche adhésive permettant sa fixation. Ce système permet une fixation rapide et aisée du support, sans outillage spécifique. Mais il présente un risque de désolidarisation du support avec le câble, tuyau ou canalisation qui y est inséré.

Le brevet FR 2 568 730 décrit un support de câbles constitué notamment de deux ailes souples qui se rejoignent de manière à recouvrir le câble inséré dans ledit support. Ce support est également muni d'une surface plane autocollante.

Le brevet BE 571724 décrit un support de câbles constitué d'une gouttière dans laquelle est insérée une rainure.

Le brevet FR 1.568.793 décrit un support de câbles ayant les caractéristiques du préambule de la revendication 1.

L'invention propose un support permettant à la fois d'organiser les câbles, tuyaux ou canalisations, tout en réduisant le temps d'installation, permettant ainsi de résoudre tout ou partie des inconvénients précités, et pouvant s'adapter à tous les types de câbles, quel que soit leur diamètre.

A cet effet, la présente invention a pour objet un support de câbles, tuyaux ou canalisations suivant les caractéristiques de la revendication 1, ainsi qu'un procédé d'insertion de câbles, tuyaux ou canalisations dans un support selon la revendication 1, suivant la revendicatiion 7.

Le support selon l'invention présente une forme telle qu'elle permet l'insertion d'un câble, tuyau ou canalisation de diamètre variable, sans qu'elle ait besoin de subir une modification préalable de son diamètre, et sans nécessiter une mise en place particulière selon le diamètre du câble. L'utilisation d'un seul support permet en effet l'insertion de câbles de différents diamètres.

La suite de la description mentionnera uniquement le terme de câbles, mais pourra tout aussi bien s'appliquer aux canalisations, tuyaux ou autres éléments ayant une forme approximativement cylindrique, destinés à former des réseaux ou circuits pour l'électricité, l'eau, le chauffage, etc.

On comprendra mieux l'invention en référence aux dessins annexés sur lesquels :
- la figure 1 est une représentation du support avant insertion des câbles,
- la figure 2 est une représentation en coupe du support avec des câbles de différents diamètres insérés,
- la figure 3 est une représentation du support avec le système de blocage des câbles,
- la figure 4 représente le support selon une variante de réalisation,
- les figures 5 et 6 représentent le support lors de sa fixation sur un seul support, tel qu'un mur, avec des câbles en nombre et en diamètre différents,
- les figures 7 et 8 sont une représentation du support disposés sur deux éléments adjacents, et muni d'un cache, les câbles étant en nombre et en diamètre variable,
- les figure 9 et 10 sont une représentation du support selon un autre type de fixation sur un mur, lorsque les câbles sont disposés sur deux portions de murs différentes, avec un cache différent,
- la figure 11 représente le système de centrage permettant une disposition adéquate des câbles.

Le support (1) est réalisé préférentiellement en une matière plastique souple, permettant au support d'être déformé lors de l'insertion du câble (7) tout en étant suffisamment rigide pour le maintenir, et ne pas être déformé.

La base du support (1), appelée dans la suite de la description semelle (2), constitue la zone sur laquelle le support (1) est fixé au mur (8) ou tout autre support (8) adapté.

La semelle (2) est fixée au mur ou toute autre surface adaptée par tout moyen approprié qui ne sera pas plus détaillé, le mode de fixation ne faisant pas l'objet de la présente invention.

Sur la face opposée à la semelle (2), le support (1) présente au moins une forme (3) en « O » dont les extrémités supérieures (3a) sont recourbées vers l'intérieur de manière à former une forme en « C ». Cette forme (3) a la même largeur que la semelle (2). Elle permet une insertion du câble (7) de manière à le guider et l'immobiliser. Cette insertion se fait par la force de manière à bloquer le câble (7).

Les extrémités (3a) permettent l'insertion et le blocage des câbles (7) de différents diamètres. Elles sont munies de lèvres (3b), favorisant le blocage des câbles (7) de faible diamètre.

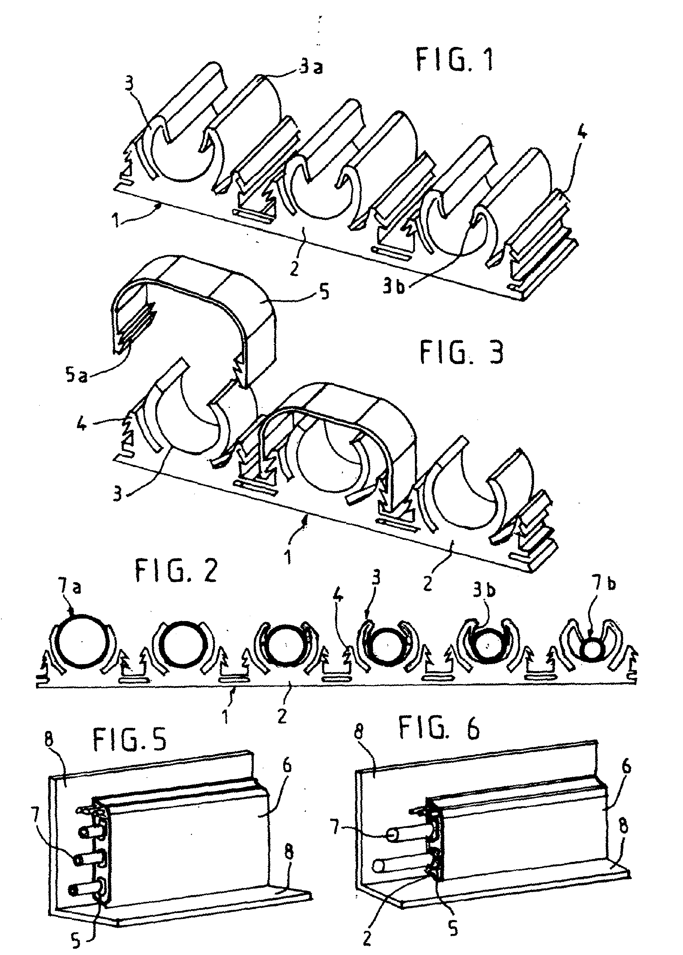

En effet, lorsqu'un câble (7a) présente un diamètre important, la souplesse de la forme en « O » (3) permet son insertion de force. Les extrémités (3a) se replient alors du côté de la forme (3), sous la pression exercée par le câble (7a), permettant ainsi le blocage du câble (7a) et son maintien dans le support (1). Les lèvres (3b) sont même découpées lorsque le diamètre du câble (7) est très important, comme on peut le voir sur la figure 2, de manière à ne pas gêner le maintien du câble (7).

Si le câble (7b) a un diamètre plus faible que la forme (3), son insertion ne se fait pas en force. Les extrémités (3a) se positionnent sur le câble (7b) de manière à le bloquer, notamment au moyen des lèvres (3b). La souplesse du support (1), et particulièrement des extrémités (3a) et des lèvres (3b) leur permet de se replier sur le câble (7b) de manière à assurer son maintien, comme on peut le voir sur la partie droite de la figure 2.

Chaque forme (3) en « O », disposée sur le support (1), présente sur chacune de ses extrémités latérales un système de doubles griffes (4) destiné à l'accrochage d'un collier de maintien (5) du câble (7) ou capot de protection. Les doubles griffes (4) épousent partiellement la forme (3) de manière à optimiser l'accroche du câble (7) et son maintien dans le support (1).

Le support (1) peut être muni d'un ergot (4a) sur une de ses extrémités, tandis que l'autre est munie d'une encoche (4b). Ces deux éléments sont disposés au-dessus des doubles griffes (4). Lors du positionnement des supports (1), l'encastrement d'un ergot (4a) d'un premier support dans l'encoche (4b) d'un second support (1) permet de s'assurer du centrage des supports.

Au niveau de la semelle (2), le support (1) peut être muni d'un prolongement (3c) permettant de mesurer automatiquement la position du support par rapport au mur ou au sol par rapport auquel il va être disposé. Le prolongement (3c) permet aux supports (1) d'être parfaitement alignés, sans recourir à l'utilisation d'un mètre lors de leurs positionnements.

Le prolongement (3c) permet ainsi de gagner du temps, par simplification de la mesure, tout en assurant un alignement optimal des supports (1) les uns par rapport aux autres.

Un collier (5) destiné à maintenir les câbles dans le support présente sur sa face inférieure interne un système de doubles griffes (5a) destiné à coopérer avec les doubles griffes (4) du support (1) par encastrement. Ces doubles systèmes de griffes (4) et (5a) solidaires l'un de l'autre assurent un maximum de sécurité et évitent un décrochage inopiné du collier (5), et éventuellement du câble (7) qui est inséré dans le support (1). Le collier de maintien (5) permet également de protéger les câbles.

Le support (1) peut ne contenir que deux formes (3) permettant l'insertion de deux câbles (7). Une insertion plus ou moins importante de câbles (7) dans le support (1) est également possible selon les besoins du réseau à mettre en place.

Après sa fixation au mur (8) ou tout autre support adapté, l'ensemble du support (1), avec les câbles (7) et les colliers (5), peut être recouvert d'un cache (6), notamment lorsque les câbles (7) sont disposés dans une partie visible.

Le cache (6) présente sur sa face interne, en relation avec le ou les support(s) (1) des extensions (6a) destinées à son maintien sur le support (1). L'extrémité de ces extensions (6a) présente un angle droit de manière à permettre l'insertion du cache (6) par simple forçage des deux éléments (1) et (6) l'un dans l'autre.

Comme on peut le voir sur ces différentes figures, le support (1) peut contenir un nombre plus ou moins important de câbles (7), et peut présenter des dispositions différentes sur le mur, selon le type de réseau auquel les câbles (7) sont destinés.

Le cache (6) peut avoir une forme approximativement rectangulaire adaptée aux dimensions du support (1), comme on peut le voir sur les figures 5 et 6, notamment quand le support est disposé sur une seule partie de mur.

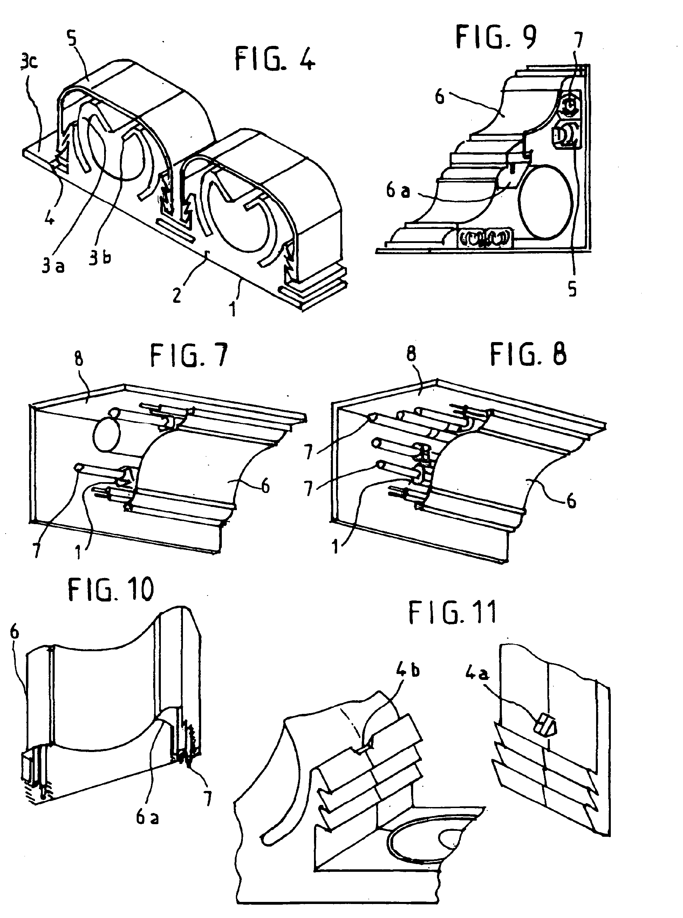

Le cache (6) peut également présenter une forme avec des arrondis lorsqu'il est destiné à masquer des supports qui sont sur deux faces différentes du mur, comme on peut le voir sur les figures 7, 8 et 10. Le cache (6) peut s'appliquer de façon horizontale, quand le support (1) est disposé sur un seul mur, ou présenter un angle, avec des découpes et des formes décoratives, lorsque qu'il est destiné à masquer des supports disposés sur des murs différents.

Le cache (6) peut également servir de corniche ou de plinthe et présenter des éléments décoratifs, tels que des profilés ou des arrondis.

Comme on peut le voir sur la figure 9, deux caches (6) peuvent être disposés l'un à côté de l'autre de manière à former une double corniche, lorsque les câbles (7) disposés sur le support (1) sont d'un diamètre important, ou sont éloignés les uns des autres. Les caches (6) sont profilés de telle manière qu'ils peuvent s'emboîter les uns dans les autres, sans nécessiter de mise en oeuvre particulière.

Le cache (6) peut également avoir une forme de goulotte, comme il est représenté à la figure 10.

Le support a une longueur variable en fonction de la longueur des câbles, conduits et autres circuits de distribution. Plusieurs supports peuvent servir pour un même câble de manière à couvrir l'ensemble de sa longueur.

Ce type de support tel que décrit présente une forme en « O » évoluant en forme de « C » de manière à permettre l'insertion d'éléments de diamètres différents, de manière à s'adapter à tous les types de canalisations, tuyaux ou câbles. Le diamètre des câbles peut varier sans nécessiter le changement du support, au moyen des extrémités du support et des lèvres, qui peuvent le cas échéant être supprimées pour des câbles de diamètre important.

Bien que l'invention ait été décrite avec des moyens de réalisation particuliers, elle comprend tous les équivalents techniques des moyens décrits, tels que définis par les revendications en annexe.

## Revendications

1. Support (1) de câbles (7), tuyaux, canalisations et autres éléments cylindriques, constitué sur une de ses faces d'une semelle (2) en matière plastique souple destinée à sa fixation sur un support (8) tel qu'un mur, et du côté opposé à ladite semelle (2) d'au moins une forme (3) en « O » dont les extrémités (3a) supérieures sont recourbées vers l'intérieur de manière à présenter une forme en « C destinées à maintenir un câble (7) ou tuyau quel que soit son diamètre, **caractérisé en ce que** les extrémités latérales de la forme (3) présentent un système de double griffe (4) destiné à l'accroche d'un collier (5) de maintien des câbles (7) et les extrémités (3a) supérieures sont munies de lèvres (3b) destinées au maintien des câbles de diamètre faible à moyen et présentant une largeur identique à celle de la semelle.

2. Support (1) selon la revendication 1, **caractérisé en ce qu'**il présente un ergot (4a) à l'une de ses extrémités et une encoche (4b) à l'autre extrémité, ces deux éléments coopérant entre eux pour le positionnement de deux supports (1).

3. Support (1) selon la revendication 2, **caractérisé en ce que** l'ergot (4a) et l'encoche (4b) sont disposés au-dessus des doubles griffes (4).

4. Support (1) selon l'une des revendications précédentes, **caractérisé en ce qu'**il est recouvert d'un cache (6) muni sur sa face interne d'extensions (6a) destinées à son maintien.

5. Support selon la revendication 1, **caractérisé en ce qu'**il présente un collier (5) muni d'un système de doubles griffes (5a) internes destinées à coopérer avec le système de doubles griffes (4) dudit support.

6. Support selon l'une des revendications précédentes, **caractérisé en ce qu'**il comprend un cache (6) coopérant avec ledit support, ledit cache présentant une forme de goulotte.

7. Procédé d'insertion de câbles, tuyaux, canalisations et autres éléments cylindriques dans un support (1) selon la revendication 1, **caractérisée en ce que** les lèvres (3b) sont découpées lors de l'insertion de câbles (7) de diamètre important.

## Claims

1. Holder (1) for cables (7), pipes, conduits and other cylindrical elements which is provided on one of its faces with a plate (2) made from a flexible plastic material which is intended to be fixed onto a support (8) such as a wall, and on the side opposite said plate (2) comprises at least one "O" shaped part (3), the upper ends (3a) of which are curved inwards so as to form a "C" shape intended to hold a cable (7) or pipe whatever the diameter of the latter, **characterised in that** the lateral ends of the shape (3) have a double clamping system (4) designed to attach a clamp (5) for holding cables (7) and the upper ends (3a) are provided with lips (3b) which are designed to support cables with a lower than average diameter and having the same width as that of the plate.

2. Holder (1) according to claim 1, **characterised in that** it comprises a pin (4a) at one end and a notch (4b) at the other end, the two elements acting in cooperation to position two holders (1).

3. Holder (1) according to claim 2, **characterised in that** the pin (4a) and the notch (4b) are arranged above the double clamps (4)

4. Holder (1) according to any one of the preceding claims, **characterised in that** it is covered by a cover (6) provided on its internal face with extensions (6a) intended to support it.

5. Holder (1) according to claim 1, **characterised in that** it comprises a clamp (5) provided with an internal double clamping system (5a) designed to cooperate with the double clamping system (4) of said holder.

6. Holder (1) according to any one of the preceding claims, **characterised in that** it comprises a cover (6) which cooperates with said holder, said cover having the form of a duct.

7. Method of inserting cable, pipes, ducts and other cylindrical elements into a holder (1) according to claim 1, **characterised in that** the lips (3b) are cut out at the time of inserting cables (7) with a large diameter.

## Patentansprüche

1. Halter (1) für Kabel (7), Rohre, Leitungen und andere zylindrische Elemente, welcher, auf einer seiner Seiten, in einer Grundplatte (2) besteht, aus flexiblem Kunststoffmaterial, die zur Befestigung desselben an einem Träger (8), wie etwa an einer Wand, bestimmt ist, und an der Seite, welche der Grundplatte (2) gegenüberliegt, in wenigstens einem "O"-Profil (3), dessen obere Enden (3a) nach innen gebogen sind, derart, dass es ein "C"-Profil darstellt, wobei sie dazu bestimmt sind, ein Kabel (7) oder ein Rohr eines beliebigen Durchmessers festzuhalten, **dadurch gekennzeichnet, dass** die seitlichen Arme des Profils (3) ein Doppelhakensystem (4) aufweisen, welches zur Befestigung einer Schelle (5) zum Festhalten von Kabeln (7) bestimmt ist, und dass die oberen Enden (3a) mit Lippen (3b) versehen sind, welche zum Festhalten von Kabeln mit kleinem oder mit mittlerem Durchmesser bestimmt sind, wobei sie eine Breite gleich jener der Grundplatte aufweisen.

2. Halter (1) nach Anspruch 1, **dadurch gekennzeichnet, dass** er eine Nase (4a) auf einem seiner Arme aufweist, und eine Einkerbung (4b) auf dem anderen Arm, wobei die zwei Elemente für die Positionierung zweier Halter (1) miteinander zusammenwirken.

3. Halter (1) nach Anspruch 2, **dadurch gekennzeichnet, dass** die Nase (4a) und die Einkerbung (4b) oberhalb der Doppelhaken (4) angeordnet sind.

4. Halter (1) nach einem der vorhergehenden Ansprüche, **dadurch gekennzeichnet, dass** er mit einer Abdeckung (6) bedeckt ist, welche an ihrer Innenseite mit Vorsprüngen (6a) zum Festhalten derselben versehen ist.

5. Halter nach Anspruch 1, **dadurch gekennzeichnet, dass** er eine Schelle (5) aufweist, die mit einem inneren Doppelhakensystem (5a) versehen ist, welches dazu bestimmt ist, mit dem Doppelhakensystem (4) des Halters zusammenzuwirken.

6. Halter nach einem der vorhergehenden Ansprüche, **dadurch gekennzeichnet, dass** er eine Abdeckung (6) umfasst, die mit dem Halter zusammenwirkt, wobei die Abdeckung eine Form einer Rinne aufweist.

7. Verfahren zum Einfügen von Kabeln, Rohren, Leitungen und anderen zylindrischen Elementen in einen Halter (1) nach Anspruch 1, **dadurch gekennzeichnet, dass** die Lippen (3b) beim Einfügen von Kabeln (7) mit großem Durchmesser ausgeschnitten werden.
